# EUROPEAN PATENT SPECIFICATION

(11) **EP 1 886 781 B1**
(45) Date of publication and mention of the grant of the patent: **05.05.2010**
(21) Application number: 06746348.9
(22) Date of filing: 12.05.2006
(51) Int. Cl.: B28C 9/02, B28C 5/46, B28B 17/02, C01B 17/00

(54) **SYSTEM FOR PRODUCTION OF SOLID MODIFIED SULFUR PRODUCTS**
SYSTEM ZUR HERSTELLUNG VON MASSIVEN MODIFIZIERTEN SCHWEFELPRODUKTEN
SYSTEME DE PRODUCTION DE PRODUITS SOLIDES DE SOUFRE MODIFIE

(30) Priority: 13.05.2005 JP 2005140673
(43) Date of publication of application: 13.02.2008
(73) Proprietor: Nippon Oil Corporation, Tokyo 105-8412 (JP); Japan Petroleum Energy Center, Minato-ku, Tokyo 105-0001 (JP)
(72) Inventor: CHATANI, Masaaki c/o Nippon Oil Corporation, Muroran-shi, Hokkaido 0500065 (JP); KURAKAKE, Minoru, c/o Nippon Oil Corporation, Muroran-shi, Hokkaido 0500065 (JP)
(74) Representative: Fleuchaus, Michael A.
(86) International application number: PCT/JP2006/309601
(87) International publication number: WO 2006/121166

(56) References cited:
- EP-A- 0 346 626
- JP-A- 04 504 101
- JP-A- 08 318 244
- JP-A- 2004 002 112
- JP-A- 2005 082 475
- PATENT ABSTRACTS OF JAPAN 2007, & JP 2006 315924 A (PETROLEUM ENERGY CENTER), 24 November 2006 (2006-11-24)
- PATENT ABSTRACTS OF JAPAN 2001, & JP 2001 030213 A (TAIHEIYO CEMENT CORP.), 6 February 2001 (2001-02-06)

## Description

### Technical Field

The present invention generally relates to a reformed sulfur solidified substance producing system according to claim 1, for producing a reformed sulfur solidified substance which is obtained by solidifying an aggregate using reformed sulfur denatured by a sulfur reforming agent as a binder, which can be utilized as material for civil engineering or construction engineering, and further, which can be stored as a non-dangerous substance (in this specification, the non-dangerous substance means an substance which does not have ignitability or an incombustible substance, and the same will be applied hereinbelow throughout the present specification), and which can be easily carried and conveyed by suitable transferring or conveying means, systems or the like.

### Background Art

In recent years, as a material which is a solid at room temperature and which is melted and brought into a fluid state when it is heated to a predetermined temperature or higher, attention is directed toward properties of sulfur which is a solid at room temperature and is melted when its temperature exceeds about 119°C, and attempt has been made to mix a predetermined sample with the sulfur and to utilize the same as one of materials for civil engineering or for construction engineering. Since a sulfur material using the sulfur is apparently similar to normal concrete with cement in terms of finish and handling, the sulfur material is called sulfur concrete or sulfur solidified substance in some cases (e.g., see Patent Document 1).

It is known that the sulfur material is stronger and has more excellent water shielding property as compared with concrete and the sulfur material has high resistance to acids, but sulfur has ignitability and is handled as a dangerous substance (in this specification, a dangerous substance means an substance having ignitability, and the same will be applied hereunder throughout the description) and thus, it is difficult that the sulfur material is melted at a worksite to thereby pour the concrete. However, in the case of a large-scale marine structure (fish bank, algal reef, wave-dissipating block and the like) and a shore protection structure, it is necessary to produce the same using the sulfur material near a worksite. Therefore, in order to improve such circumstances, attempt has been made to mix molten sulfur with the sulfur reforming agent as addition agent to denature thereof, thereby producing reformed sulfur (e.g., see Patent Document 2).
Patent Document 1: Japanese Laid-open (Kokai) Patent Application Publication No.2004-160693
Patent Document 2: Japanese Laid-open (Kokai) Patent Application Publication No.2005-82475 , which discloses the preamble of claim 1.

### Disclosure of the Invention

### Problems to be Solved by the Invention

However, the above-mentioned sulfur and addition agent (sulfur reforming agent) used for reforming the sulfur are dangerous substances, so that it is difficult to convey them, and it is necessary that a producing device thereof is an explosion-proof device. In addition, a special molten sulfur tank is required for storing sulfur at the producing worksite. Thus, to utilize the sulfur material, costs for transferring and producing the sulfur material are increased.

Further, as described in Patent Document 2, it is proposed to mix reformed sulfur and fine aggregate to thereby produce a molten reformed sulfur intermediate material, and to mix the molten reformed sulfur intermediate and coarse aggregate and solidify the same so as to produce a reformed sulfur solidified substance. The reformed sulfur intermediate material and the reformed sulfur solidified substance are handled and treated as non-dangerous substances, but it is necessary to handle them in a state where the sulfur is melted at the time of their production. Therefore, the producing system must always heat, at 119°C (solidification temperature of molten sulfur) or higher, a location where the molten sulfur material is stored and all of pipes through which sulfur material flows. However, in the current production of a reformed sulfur solidified substance, there has not yet been provided a practical producing system which always heat, at a predetermined temperature or higher, all of equipment where molten sulfur material is stored and through which the molten sulfur flows. Therefore, it was not possible to safely and easily produce a reformed sulfur solidified substance.

Hence, in view of the above conventional problems, the present invention has an object to provide a reformed sulfur solidified substance producing system for producing a reformed sulfur solidified substance which can be stored and which can be easily conveyed as a non-dangerous substance.

### Means for Solving the Problems

In order to achieve the above object, a reformed sulfur solidified substance producing system according to the present invention, comprises:
a molten sulfur tank which accommodates therein at least molten sulfur, and heats any substance accommodated thereinside to a predetermined temperature or higher,
a sulfur reforming agent tank which accommodates therein a sulfur reforming agent denaturing the molten sulfur,
a reformed sulfur producing tank which receives and mixes the molten sulfur from the molten sulfur tank and the sulfur reforming agent from the sulfur reforming agent tank to thereby produce reformed sulfur, and heats an inside accommodated substance to a predetermined temperature or higher,
a fine aggregate hot bin which accommodates therein at least a fine aggregate, and heats an inside accommodated substance to a predetermined temperature or higher,
a reformed sulfur intermediate material tank which receives and mixes reformed sulfur from the reformed sulfur producing tank and the fine aggregate from the fine aggregate hot bin to thereby produce reformed sulfur intermediate material, and heats an inside accommodated substance to a predetermined temperature or higher,
a coarse aggregate hot bin which accommodates therein a coarse aggregate, and heats an inside accommodated substance to a predetermined temperature or higher,
a mulling device which receives and mulls the reformed sulfur intermediate material from the reformed sulfur intermediate material tank and the coarse aggregate from the coarse aggregate hot bin, and heats an inside mulled substance to a predetermined temperature or higher, and
a pouring device which receives and stores raw material mulled by the mulling device, and heats the raw material to a predetermined temperature or higher, the pouring device being capable of measuring the inside raw material to pour the same after measurement into a mold form, wherein the predetermined temperature is 119° or higher, characterized by
a piping system is arranged to mutually connect individual units from the molten sulfur tank through the mulling device to provide a mutual fluid communication thereamong, and the piping system being additionally provided with a heating means for heating an inside substance that flows through every part of the piping system to a predetermined temperature or higher.

With such a structure, the substance, i.e., the molten sulfur is accommodated in the molten sulfur tank, and at the same time, the accommodated substance is heated to a predetermined temperature or higher, the sulfur reforming agent which denatures the molten sulfur is accommodate in the sulfur reforming agent tank, molten sulfur from the molten sulfur tank and the sulfur reforming agent from the sulfur reforming agent tank are received in the reformed sulfur producing tank, so that they are mixed therein to produce reformed sulfur, and at the same time, the inside accommodated substance is heated to a predetermined temperature or higher. The fine aggregate is accommodated in the fine aggregate hot bin, to be simultaneously heated to a predetermined temperature or higher. The reformed sulfur from the reformed sulfur producing tank and the fine aggregate from the fine aggregate hot bin are then received in the reformed sulfur intermediate material tank to be mixed therein to thereby produce a reformed sulfur intermediate material. And at the same time, the inside accommodated every substance, i.e., the reformed sulfur intermediate material is heated to a predetermined temperature or higher. The coarse aggregate is accommodated in the coarse aggregate hot bin, thereby being heated to a predetermined temperature or higher, and the reformed sulfur intermediate material from the reformed sulfur intermediate material tank and the coarse aggregate from the coarse aggregate hot bin are received by the mulling device and mixed therein. At the same time, the mulled substance in the mulling device is heated to a predetermined temperature or higher, the raw material mulled by the mulling device is received and stored in the pouring device, so that they are heated to a predetermined temperature or higher. Simultaneously, the inside raw material is measured and poured into the mold form. At that time, every fluid substance within the piping system is heated to a predetermined temperature or higher by the heating means additionally provided for the piping system which mutually connects every unit from the molten sulfur tank through the mulling device. Accordingly, in production of the reformed sulfur solidified substance, all of equipment in which molten sulfur material is stored and through which the molten sulfur material flows is always heated to a predetermined temperature or higher.

Further, an on-off valve provided at an opening of a scale hopper which measures a raw material in the pouring device through which the raw material is delivered towards outside is configured as a gate valve in which a flat plate is moved to reciprocate across the outlet opening so as to open and close the said opening. With this, at the outlet opening of the scale hopper for the raw material, the flat plate of the gate valve forcedly comes into and retracts from the raw material in such a manner that the raw material permits the flat plate to forcedly intrude into the raw material at the outlet opening to thereby surely perform opening and closing motion of the gate valve.

In production of the reformed sulfur solidified substance, all equipment is always heated to 119°C (solidification temperature of molten sulfur) or higher.

### Effect of the Invention

In accordance with the present invention, in the production of reformed sulfur solidified substance, all equipment in which molten sulfur material is stored and through which the molten sulfur material in a fluid state can always be heated to the predetermined temperature or higher. Therefore, in production of the reformed sulfur solidified substance, sulfur or reformed sulfur can be handled and treated in its molten state. Accordingly, it is possible to safely and easily produce a reformed sulfur solidified substance which can be stored and easily transferred as a non-dangerous substance.

Further, in accordance with an embodiment of the present invention, in the outlet opening of the scale hopper for raw material, the flat plate in the shape of the gate valve is moved to reciprocate across the outlet opening while forcibly moving into and retracting from the raw material, to thereby surely open and close the outlet opening. Therefore, the gate valve surely opens and closes at the outlet opening of the scale hopper where the molten sulfur material is prone to be solidified, so that the raw material can be precisely measured. Accordingly, a reformed sulfur solidified substance having a predetermined weight can be produced.

Furthermore, in accordance with a further embodiment of the present invention, in production of a reformed sulfur solidified substance, all equipment can always be heated to 119°C (solidification temperature of molten sulfur) or higher. Therefore, when a reformed sulfur solidified substance is produced, sulfur or reformed sulfur can be handled and treated in its molten state.

### Brief Description of the Drawings

FIG. 1 is an explanatory view showing an embodiment of a reformed sulfur solidified substance producing system according to the present invention; and
FIG. 2 is a side view showing a gate valve provided at an opening of a scale hopper which measures raw material in a pouring device, the raw material being sent out through the opening.

### Explanation of Reference Symbols

1 Molten sulfur tank
2 Sulfur reforming agent tank
3 Reformed sulfur producing tank
4 Fine aggregate hot bin
5 Reformed sulfur intermediate material tank
6 Coarse aggregate hot bin
7 Mulling device
8 Pouring device
10 First heating medium heater
11 Supply line of heating medium
12 Reflux line of heating medium
27 Aggregate scale hopper
29 Intermediate material scale hopper
30 Injection pipe
32 Skip bucket
33 Transfer skip device
34 Surge bin
35 Scale hopper
36 Mold form
38 Outlet opening of raw material
39 Flat plate
40 Drive cylinder
42 Second heating medium heater
43 Supply line of heating medium
44 Reflux line of heating medium

### Best Mode for Carrying Out the Invention

A detailed description of an embodiment of the present invention will be provided hereunder with reference to the accompanying drawings.

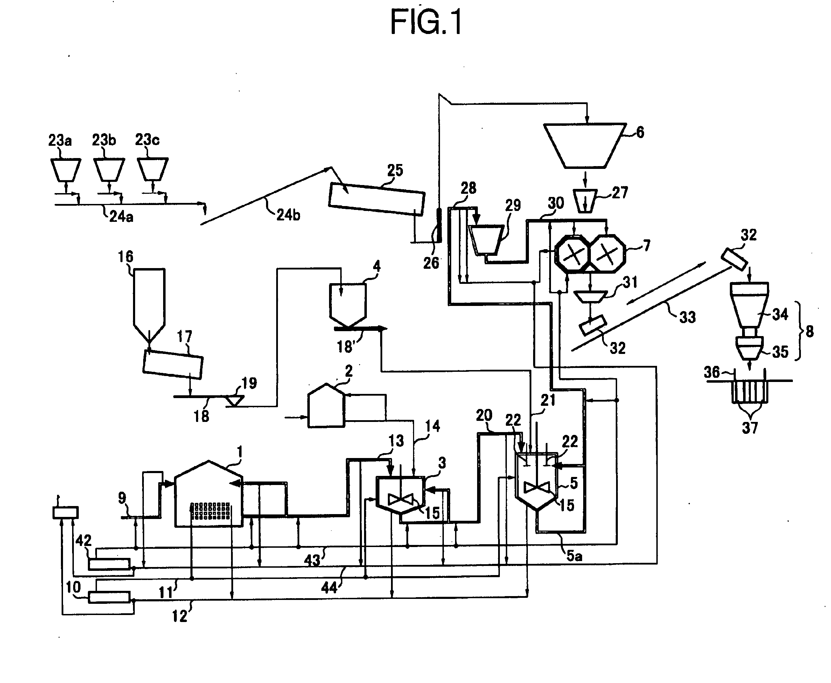

Figure 1 is a view showing an embodiment of a reformed sulfur solidified substance producing system of the present invention. The reformed sulfur solidified substance producing system is for producing a reformed sulfur solidified substance which is obtained by solidifying an aggregate using reformed sulfur denatured by a sulfur reforming agent as a binder, which can be utilized as material for both civil engineering and construction engineering, and further, which is handled and treated as a non-dangerous substance. The reformed sulfur solidified substance producing system includes a molten sulfur tank 1, a sulfur reforming agent tank 2, a reformed sulfur producing tank 3, a fine aggregate hot bin 4, a reformed sulfur intermediate material tank 5, a coarse aggregate hot bin 6, a mulling device 7 and a pouring device 8.

The molten sulfur tank 1 accommodates molten sulfur therein, and at the same time, which heats the inside accommodated substance (molten sulfur) to a predetermined temperature (e.g., 119°C) or higher. The sulfur is normal single sulfur, e.g., natural sulfur, or sulfur produced by desulfuration of oil or natural gas. The molten sulfur is melted at 150°C, for example, and is supplied from a tank lorry (not shown) into the molten sulfur tank 1 through the supply pipe 9. The molten sulfur tank 1 has a jacket type structure, and heating means for heating the molten sulfur therein is added to the molten sulfur tank 1. That is, a first heating medium heater 10 is provided on an outer portion of the molten sulfur tank 1, water and other heating medium are heated by an electric heater and the like, and further, the heated heating medium is supplied to the jacket type structure of the molten sulfur tank 1 through a supply line 11 and a reflux line 12.

The sulfur reforming agent tank 2 accommodates sulfur reforming agent which denatures the molten sulfur, therein. Denaturing the molten sulfur is equivalent to polymerizing sulfur for example by sulfur reforming agent. Examples of the sulfur reforming agent include one of dicyclopentadiene (DCPD), tetrahydroindene (THI), and cyclopentadiene, its oligomer (dimer to pentamer mixtures), and olefin compound such as dipentene, vinyltoluene and dicyclopentene and the like, or a mixture of two or more of them.

The reformed sulfur producing tank 3 receives and mixes molten sulfur from the molten sulfur tank 1 and sulfur reforming agent from the sulfur reforming agent tank 2 to produce reformed sulfur, and in addition, which heats the inside accommodated substance (reformed sulfur) to a predetermined temperature (e.g., 119°C) or higher. A supply pipe 13 from the molten sulfur tank 1 and a supply pipe 14 from the sulfur reforming agent tank 2 are connected to a ceiling portion of the reformed sulfur producing tank 3. An anchor-shaped rotating blade 15, for example, as mixing/stirring means is provided within the tank. The reformed sulfur produced here is obtained by polymerizing sulfur by the sulfur reforming agent, and it is preferable that the reformed sulfur is a reactant between sulfur and sulfur reforming agent. The reformed sulfur producing tank 3 has a jacket type structure, and heating means for heating reformed sulfur therein is added to the reformed sulfur producing tank 3. That is, the supply line 11 and the reflux line 12 from the first heating medium heater 10 are respectively connected to the reformed sulfur producing tank 3, heating medium heated by the first heating medium heater 10 is supplied to the jacket type structure of the reformed sulfur producing tank 3 through the supply line 11 and the reflux line 12.

The fine aggregate hot bin 4 accommodates fine aggregate therein and additionally, heats the accommodated substance (fine aggregate) therein to a predetermined temperature (e.g., 150°C) or higher. Although the fine aggregate is not especially limited only if it can be used as aggregate, the fine aggregate may be aggregate generally used in concrete, and examples of the aggregate are one or more of natural stone, sand, gravel, quartz sand, steel slug, ferronickel slug, copper slug, by-product produced when metal is produced, coal ash, fuel crematory ash, electric dust collection ash, molten slug, seashell and a mixture thereof. Further, silica hume, alumina, quartz powder, quartz rock, clay mineral, activated carbon, glass powder, equivalent inorganic or organic aggregate having no harmful material can also be used. Among these fine aggregates, one or more of coal ash, quartz sand, silica hume, quartz powder, sand, glass powder and electric dust collection ash are preferable because adjustment of the particle diameter distribution is easy, and uniform material can be obtained in high volume. The fine aggregate usually comprises aggregate having a particle diameter of 5 mm or less, preferably 1 mm or less. If the particle diameter of the fine aggregate exceeds 5 mm, the fine aggregate cannot immediately be remelted. A known technique can be utilized to adjust the particle diameter of the fine aggregate, and the particle diameter can be adjusted by a sieve for example.

When coal ash is used as the fine aggregate, coal ash accommodated in a coal ash silo 16 is put into a drying kiln 17 such as a rotary kiln, and is burned at, for example, 150°C for drying. Then, it is conveyed to a transfer pump 19 by a transfer device 18 such as a belt conveyor which is locally heated by an electric heater, and it is pumped and sent to the fine aggregate hot bin 4 by the transfer pump 19. A sidewall of the fine aggregate hot bin 4, for example, is also heated by an electric heater, and the fine aggregate therein is heated to about 150°C, for example.

The reformed sulfur intermediate material tank 5 receives reformed sulfur from the reformed sulfur producing tank 3 and fine aggregate from the fine aggregate hot bin 4 and mixes them so as to produce reformed sulfur intermediate material, and further, heats an inside accommodated substance (reformed sulfur intermediate material) to a predetermined temperature (e.g., 119°C) or higher. A supply pipe 20 from the reformed sulfur producing tank 3 and a supply pipe 21 from the fine aggregate hot bin 4 are respectively connected to a ceiling portion of the reformed sulfur intermediate material tank 5. The anchor-shaped rotating blade 15 is provided as mixing/stirring means is provided in the tank. Two rotating blades 22 which rotate at high speed are also provided at an upper portion within the tank. This is for a dry fine aggregate of around 150°C which falls into the tank from the upper portion thereof to be dispersed and be easily mixed with previously supplied reformed sulfur, and further, for reformed sulfur and fine aggregate to be immediately mixed uniformly within the tank.

The reformed sulfur intermediate material tank 5 has a jacket type structure, and heating means for heating a reformed sulfur intermediate material therein is additionally provided for the reformed sulfur intermediate material tank 5. That is, the supply line 11 and the reflux line 12 from the first heating medium heater 10, are respectively connected to the reformed sulfur intermediate material tank 5, heating medium heated by the first heating medium heater 10 is supplied to the jacket type structure portion of the reformed sulfur intermediate material tank 5 through the supply line 11 and the reflux line 12. Further, the fine aggregate from the fine aggregate hot bin 4 is heated by a transfer device 18' which is similar to the transfer device 18 and in this state, the fine aggregate is supplied through the supply pipe 21.

In the reformed sulfur intermediate material produced here, a mix ratio of the reformed sulfur and the fine aggregate is 2:1 or 1.5:1 for example. The viscosity of the reformed sulfur intermediate material produced in this manner is approximately 750 mPa cm. Further, regarding the reformed sulfur intermediate material produced in this manner, it is easier for the produced material to satisfy the requirement for passing the examination of a non-dangerous substance through a small gas flame ignition test, if the amount of fine aggregate to be mixed is increased, for example. A piping equipment after an outlet pipe 5a of the reformed sulfur intermediate material tank 5 can clear the criteria of the inside fluid being treated as a dangerous substance.

A coarse aggregate hot bin 6 accommodates a coarse aggregate therein, and in additionally, heats an inside accommodated substance (coarse aggregate) to around a predetermined temperature (e.g., 120 to 130°C). The coarse aggregate is not especially limited only if it can be used as aggregate, and examples of the fine aggregate are as described above. The particle diameter of the coarse aggregate is preferably 1 mm or more, and more preferably greater than 5 mm, and its upper limit is preferably 50 mm. If the particle diameter of the coarse aggregate exceeds 50 mm, it is not preferable because long time is required for mixing at the time of production. A known technique can be utilized for adjusting a particle diameter of a coarse aggregate, and the particle diameter can be adjusted by a sieve for example.

In FIG. 1, the coarse aggregate such as sand, slug, seashell and the like are put into a first aggregate cold hopper 23a, a second aggregate cold hopper 23b and a third aggregate cold hopper 23c, they are transferred into a drying kiln 25 such as a rotary kiln by a first belt conveyor 24a and a second belt conveyor 24b, and they are burned at 150°C and dried, they are placed on a hot elevator 26 which is locally heated by an electric heater, and lifted up, and sent to the coarse aggregate hot bin 6. A sidewall of the coarse aggregate hot bin 6 is also heated for example by an electric heater, so that a coarse aggregate therein is heated to about 120 to 130°C for example.

The mulling device 7 receives and mixes a reformed sulfur intermediate material from the reformed sulfur intermediate material tank 5 and a coarse aggregate from the coarse aggregate hot bin 6, and further, heats the mulled substance therein to a predetermined temperature (e.g., 119°C) or higher. The coarse aggregate discharged from the coarse aggregate hot bin 6 is put into the aggregate scale hopper 27, and a predetermined amount of coarse aggregate is put into the mulling device 7. On the other hand, the reformed sulfur intermediate material from the reformed sulfur intermediate material tank 5 is charged into the intermediate material .scale hopper 29 through a supply pipe 28 which is continuously connected to the outlet pipe 5a, a predetermined amount of reformed sulfur intermediate material is pumped through an injection pipe 30 by a spray pump (not shown), and it is injected into the mulling device 7 from an injection opening formed in a tip end of the injection pipe 30. Then, the coarse aggregate and the reformed sulfur intermediate material are mulled by a rotating blade in the mulling device 7. A mix ratio between the coarse aggregate and the reformed sulfur intermediate material at that time is 7:3, for example. If the mix ratio of the reformed sulfur intermediate material is small, the reformed sulfur intermediate material is not solidified easily, and if the mix ratio of the coarse aggregate is small, high strength cannot be easily obtained, and both the cases are not preferable. The mulling device 7 has a jacket type structure, and heating means for heating a mulled substance therein is added to the mulling device 7.

The pouring device 8 receives and stores a raw material (mulled substance) which is mulled by the mulling device 7, and further, heats the same to a predetermined temperature (e.g., 120 to 130°C) or higher, and furthermore, measures the inside raw material to subsequently pour the same into a mold form. The raw material discharged from the mulling device 7 is once received by a cushion hopper 31 disposed below the mulling device 7, and is put into a skip bucket 32 disposed below the cushion hopper 31. The skip bucket 32 moves on an inclined transfer skip device 33 and is lifted up, the skip bucket 32 turns above a surge bin 34 which stores a raw material and the inside raw material is put into the surge bin 34. A scale hopper 35 which measures a raw material is connected to a lower portion of the surge bin 34, and the scale hopper 35 measures a predetermined amount of raw material to be poured into the mold form 36. The surge bin 34 and the scale hopper 35 constitute the pouring device 8. Side walls, for example, of the cushion hopper 31, the skip bucket 32, the surge bin 34 and the scale hopper 35 are heated by electric heater or the like, and the inside raw material is heated to about 120 to 130°C.

The mold form 36 disposed below the scale hopper 35 is disposed on an upper surface of a vibrator 37. The vibrator 37 vibrates a raw material which has been put into the mold form 36 to thereby remove air included in the raw material from the raw material. As a result, the strength of the reformed sulfur solidified substance after it is cooled and solidified is enhanced to improve the finish. Examples of the shape of the mold form 36 are a panel shape, a tile shape and a block shape, but these shapes are not limited to them. Further, ultrasonic vibration may be applied to carry out the forming process.

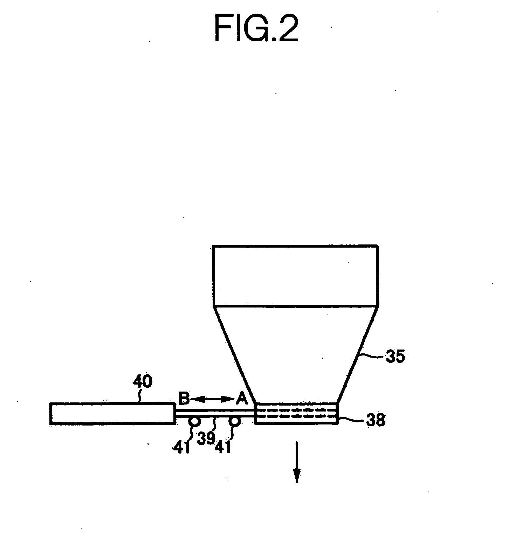

Furthermore, as shown in FIG. 2, in the pouring device 8, an on-off valve of an outlet opening 38, through which the raw material is delivered, of the scale hopper 35 which measures a raw material is defined as a gate valve in which a flat plate 39 is reciprocated to thereby open and close the outlet opening 38. That is, the flat plate 39 can horizontally be inserted into the outlet opening 38 formed in a lower end of the scale hopper 35. The flat plate 39 is slid by a drive cylinder 40 due to air pressure or hydraulic pressure as shown in arrows A and B to thereby forcedly reciprocate the flat plate 39 in a manner such that it forcedly move into and retract from across the outlet opening 38 through the raw material staying there, so that the valve is surely opened and closed. By nature of the reformed sulfur intermediate material, it is necessary to previously heat it to a solidification point (119°C) of sulfur or higher. Therefore, a packing (including silicon rubber) for preventing leakage of raw material cannot be used for the on-off valve of the outlet opening 38, and in the case of an on-off valve of a type in which the valve turns about a support shaft of one end, if a raw material adheres to the other end, the valve cannot close completely, and the raw material leaks from the outlet opening 38. In FIG. 2, a symbol 41 represents a support member which guides the reciprocating motion of the flat plate 39 in the directions of the arrows A and B.

In the structure of the entire system, all of piping system which mutually connect the devices from the molten sulfur tank 1 to the mulling device 7 have double structure, and heating means for heating fluid in the piping system to a predetermined temperature (e.g., 119°C) or higher is added to the piping system. That is, a second heating medium heater 42 is provided outside the molten sulfur tank 1, water and other heating medium are heated by an electric heater and the like, and the heated heating medium is supplied, through the supply line 43 and the reflux line 44, to the supply pipe 9 for supplying molten sulfur to the molten sulfur tank 1, the supply pipe 13 for molten sulfur from the molten sulfur tank 1 to the reformed sulfur producing tank 3, the supply pipe 20 for reformed sulfur from the reformed sulfur producing tank 3 to the reformed sulfur intermediate material tank 5, the supply pipe 28 for reformed sulfur intermediate material from the reformed sulfur intermediate material tank 5 to the intermediate material scale hopper 29, and the injection pipe 30 through which reformed sulfur intermediate material is sent from the intermediate material scale hopper 29 to the mulling device 7, and further, to the jacket type structure portion of the mulling device 7. Therefore, in the producing system of reformed sulfur solidified substance, sulfur material which is under the production procedure is always heated to the solidification point of sulfur or higher, and reformed sulfur solidified substance can safely and be easily produced.

In the reformed sulfur solidified substance producing system, a nitrogen gas generating device which supplies nitrogen gas to a portion where the molten sulfur, the reformed sulfur or the reformed sulfur intermediate material is accommodated may be added (not shown in FIG. 1). In this case, sealing or purging is carried out using nitrogen gas which is inert gas, so that oxidation of sulfur can be prevented and at the same time, generation of hydrogen sulfide can be prevented.

A state where a reformed sulfur solidified substance is produced using the reformed sulfur solidified substance producing system having the above-described configuration will be explained. In FIG. 1, molten sulfur is accommodated in the molten sulfur tank 1, and further, the inside molten sulfur is heated to a predetermined temperature (e.g., 119°C) or higher. A sulfur reforming agent for denaturing the molten sulfur is accommodated in the sulfur reforming agent tank 2.

In this state, molten sulfur delivered from the molten sulfur tank 1 through the supply pipe 13 and sulfur reforming agent delivered from the sulfur reforming agent tank 2 through the supply pipe 14 are received and mixed in the reformed sulfur producing tank 3 so as to produce reformed sulfur, and further, the inside reformed sulfur therein is heated to a predetermined temperature (e.g., 119°C) or higher. On the other hand, a fine aggregate is accommodated within the fine aggregate hot bin 4, and, the inside fine aggregate therein is heated to a predetermined temperature (e.g., 150°C) or higher.

Next, reformed sulfur delivered from the reformed sulfur producing tank 3 through the supply pipe 20 and a fine aggregate delivered from the fine aggregate hot bin 4 through the supply pipe 21 are received and mixed in the reformed sulfur intermediate material tank 5 to thereby produce reformed sulfur intermediate material, and the inside reformed sulfur intermediate material is heated to a predetermined temperature (e.g., 119°C) or higher. The reformed sulfur intermediate material produced in this manner is handled as a non-dangerous substance, and the piping equipment after the outlet pipe 5a of the reformed sulfur intermediate material tank 5 can clear the criteria of the inside fluid being handled as a dangerous substance.

Next, reformed sulfur intermediate material delivered from the reformed sulfur intermediate material tank 5 through the outlet pipe 5a and the supply pipe 28 is measured by the intermediate material scale hopper 29, and it is injected into the mulling device 7 through the injection pipe 30. On the other hand, prior to this, a coarse aggregate discharged from the coarse aggregate hot bin 6 is put into the aggregate scale hopper 27, and a predetermined amount of coarse aggregate is put into the mulling device 7. In this state, reformed sulfur intermediate material from the reformed sulfur intermediate material tank 5 and a coarse aggregate from the coarse aggregate hot bin 6 are mulled by the mulling device 7, and further, the inside mulled substance is heated to a predetermined temperature (e.g., 119°C) or higher.

A raw material mulled by the mulling device 7 is sent by the skip bucket 32 and the transfer skip device 33 and put into the surge bin 34. A predetermined amount of raw material is measured by the scale hopper 35 provided on a lower portion of the surge bin 34, and the raw material is poured into the mold form 36 disposed below the scale hopper 35. Then, the raw material is cooled and solidified in the mold form 36, and a reformed sulfur solidified substance having a desired shape defined by the mold form 36 is produced.

The produced reformed sulfur solidified substance can be utilized as various structures including a block. For example, the reformed sulfur solidified substance can be utilized as a tile, a block, a panel material, a floor material, a fish bank, a shore protection material, an algal reef forming material and the like. The reformed sulfur solidified substance can also be utilized as a sidewalk boundary block, a flat plate, an interlocking block and the like as a road product. Further, the reformed sulfur solidified substance can be utilized as a fish bank, a wave-dissipating block, a breakwater block, a vegetation block and the like as a construction product. Furthermore, the reformed sulfur solidified substance can be utilized as an earth retaining wall, a retaining wall, an L-shaped wall, a sheet pile and the like as a civil engineering material.

## Claims

1. A reformed sulfur solidified substance producing system comprising
a molten sulfur tank (1) which accommodates therein at least molten sulfur, and heats any substance accommodated thereinside to a predetermined temperature or higher,
a sulfur reforming agent tank (2) which accommodates therein a sulfur reforming agent denaturing the molten sulfur,
a reformed sulfur producing tank (3) which receives and mixes molten sulfur from the molten sulfur tank (1) and the sulfur reforming agent from the sulfur reforming agent tank (2) to thereby produce reformed sulfur, and heats an inside accommodated substance to a predetermined temperature or higher,
a fine aggregate hot bin (4) which accommodates therein a fine aggregate, and heats an inside accommodated substance to a predetermined temperature or higher,
a reformed sulfur intermediate material tank (5) which receives and mixes reformed sulfur from the reformed sulfur producing tank (3) and the fine aggregate from the fine aggregate hot bin (4) to thereby produce reformed sulfur intermediate material, and heats an inside accommodated substance to a predetermined temperature or higher,
a coarse aggregate hot bin (6) which accommodates a coarse aggregate, and heats an inside accommodated substance to a predetermined temperature or higher,
a mulling device (7) which receives and mulls the reformed sulfur intermediate material from the reformed sulfur intermediate material tank (5) and the coarse aggregate from the coarse aggregate hot bin (6), and heats an inside mulled substance to a predetermined temperature or higher, and
a pouring device (8) which receives and stores raw material mulled by the mulling device (7), and heats the raw material to a predetermined temperature or higher, the pouring device (8) being capable of measuring the inside raw material to pour the same after measurement into a mold form (36), wherein the predetermined temperature is 119°C or higher **characterized by**
a piping system (9,13,20,28,30) is arranged to mutually connect individual units from the molten sulfur tank (1) through the mulling device (7) to provide a mutual fluid communication thereamong, and the piping system (9,13,20,28,30) being additionally provided with a heating means (42,43,44) for heating an inside substance that flows through every part of the piping system (9,13,20,28,30).

2. The reformed sulfur solidified substance producing system according to claim 1, wherein the pouring device (8) is provided with a scale hopper (35) which measures the raw material having an on-off valve provided at an outlet opening (38) from which the raw material is delivered, said on-off valve is defined as a gate valve including a flat plate (39) which is reciprocated to open and close the outlet opening (38).

## Patentansprüche

1. System zur Herstellung von verfestigter umgewandelter Schwefelsubstanz, umfassend
einen Schwefelschmelzetank (1), der wenigstens geschmolzenen Schwefel enthält und jede darin enthaltene Substanz auf eine vorbestimmte Temperatur oder darüber erhitzt,
einen Schwefelumwandlungsmitteltank (2), der ein Schwefelumwandlungsmittel enthält, das den geschmolzenen Schwefel denaturiert,
einen Herstellungstank (3) für umgewandelten Schwefel, der geschmolzenen Schwefel aus dem Schwefelschmelzetank (1) und das Schwefelumwandlungsmitrel aus dem Schwefelumwandlungsmitteltank (2) aufnimmt und vermischt, um **dadurch** umgewandelten Schwefel herzustellen, und eine darin enthaltene Substanz auf eine vorbestimmte Temperatur oder darüber erhitzt,
einen Feinaggregat-Heißbehälter (4), der ein feines Aggregat enthält und eine darin enthaltene Substanz auf eine vorbestimmte Temperatur oder darüber erhitzt,
einen Tank (5) für Zwischenmaterial für umgewandelten Schwefel, der umgewandelten Schwefel aus dem Herstellungstank (3) für umgewandelten Schwefel und das feine Aggregat aus dem Feinaggregat-Heißbehälter (4) aufnimmt und vermischt, um **dadurch** Zwischenmaterial für umgewandelten Schwefel herzustellen, und eine darin enthaltene Substanz auf eine vorbestimmte Temperatur oder darüber erhitzt,
einen Grobaggrcgat-Heißbehälter (6), der ein grobes Aggregat enthält und eine darin enthaltene Substanz auf eine vorbestimmte Temperatur oder darüber erhitzt,
eine Mischvorrichtung (7), die das Zwischenmaterial für umgewandelten Schwefel aus dem Tank (5) für Zwischenmaterial für umgewandelten Schwefel und das grobe Aggregat aus dem Grobaggregat-Heißhehäher (6) aufnimmt und eine darin gemischte Substanz auf eine vorbestimmte Temperatur oder darüber erhitzt, und
eine Schüttvorrichtung (8), die von der Mischvorrichtung (7) gemischtes Rohmaterial aufnimmt und speichert und das Rohmaterial auf eine vorbestimmte Temperatur oder darüber erhitzt, wobei die Schüttvorrichtung (8) in der Lage ist, das darin befindliche Rohmaterial zu messen, um dasselbe nach der Messung in eine Gussform (36) zu schütten, wobei die vorbestimmte Temperatur 119°C oder mehr beträgt, **dadurch gekennzeichnet, dass**
' ein Leitungssystem (9, 13, 20, 28, 30) dazu angeordnet ist, einzelne Einheiten von dem Schwefelschmelzetank (1) zu der Mischvorrichtung (7) miteinander zu verbinden, um eine gegenseitige Fluidkommunikation dazwischen bereitzustellen, und dass das Leitungssystem (9, 13, 20, 28, 30) zusätzlich mit einem Heizmittel (42, 43, 44) zum Erhitzen einer darin befindlichen Substanz, die durch jeden Teil des Leitungssystems (9, 13, 20, 28, 30) strömt, versehen ist.

2. System zur Herstellung von verfestigter umgewandelter Schwefelsubstanz gemäß Anspruch 1, wobei die Schütevorrichtung (8) mit einem Wiegetrichter (35) versehen ist, der das Rohmaterial misst und ein an einer Auslassöffnung (38) vorgesehenes Ein-Aus-Ventil aufweist, aus dem das Rohmaterial abgegeben wird, wobei das Ein-Aus-Ventil als Absperrventil bestimmt ist, das eine zum Öffnen und Schließen der Auslassöffnung (38) hin und her bewegte flache Platte (39) aufweist.

## Revendications

1. Système de production de substance solidifiée de soufre reformé comprenant :
un réservoir de soufre fondu (1) contenant au moins du soufre fondu et chauffant toute substance qu'il contient à une température prédéterminée ou plus,
un réservoir d'agent de reformation de soufre (2) contenant un agent de reformation de soufre dénaturant le soufre fondu,
un réservoir de production de soufre reformé (3) recevant et mélangeant le soufre fondu provenant du réservoir de soufre fondu (1) et l'agent de reformation de soufre provenant du réservoir d'agent de reformation de soufre (2) de façon à produire du soufre reformé et chauffant la substance qu'il contient à une température prédéterminée ou plus,
un bac brûlant d'agrégat fin (4) contenant un agrégat fin et chauffant la substance qu'il contient à une température prédéterminée ou plus,
un réservoir de matériau intermédiaire de soufre reformé (5) contenant et mélangeant du soufre reformé provenant du réservoir de production de soufre reformé (3) et l'agrégat fin provenant du bac brûlant d'agrégat fin (4) de façon à produire un matériau intermédiaire de soufre reformé et chauffant la substance qu'il contient à une température prédéterminée ou plus,
un bac brûlant d'agrégat grossier (6) contenant un agrégat grossier et chauffant la substance qu'il contient à une température prédéterminée ou plus,
un dispositif de meulage (7) recevant et meulant le matériau intermédiaire de soufre reformé provenant du réservoir de matériau intermédiaire de soufre reformé (5) et
l'agrégat grossier provenant du bac brûlant d'agrégat grossier (6) et chauffant la substance meulée à l'intérieur à une température prédéterminée ou plus, et
un dispositif de versement (8) recevant et stockant un matériau brut meulé par le dispositif de meulage (3) et chauffant le matériau brut à une température prédéterminée ou plus, le dispositif de versement (8) étant capable de mesurer le matériau brut qu'il contient pour verser ce matériau après mesurage dans un moule (36), dans lequel la température prédéterminée est de 119°C ou plus, **caractérisé en ce que** un système de tuyauterie (9, 13, 20, 28, 30) est agencé de manière à raccorder mutuellement des unités individuelles du réservoir de soufre fondu (1) par l'intermédiaire du dispositif de meulage (7) pour produire une communication fluide mutuelle entre elles et le système de tuyauterie (9, 13, 20, 28, 30) étant muni en outre d'un moyen de chauffage (42, 43, 44) pour chauffer une substance intérieure s'écoulant à travers chaque partie du système de tuyauterie (9, 13, 20, 28, 30).

2. Système de production de substance solidifiée de soufre reformé selon la revendication 1, dans lequel le dispositif de versement (8) est muni d'une trémie de mesure (35) mesurant le matériau brut comportant un robinet ouvert-fermé prévu sur une ouverture de sortie (38) à partir de laquelle le matériau brut est délivré, ledit robinet ouvert-fermé étant défini comme un robinet-vanne incluant une plaque plate (39) animée d'un mouvement alternatif pour ouvrir et fermer l'ouverture de sortie (38).
